# EUROPÄISCHE PATENTANMELDUNG

(11) **EP 4 496 082 A1**
(43) Veröffentlichungstag der Anmeldung: **22.01.2025**
(21) Anmeldenummer: 23186253.3
(22) Anmeldetag: 18.07.2023
(51) Int. Cl.: H01M 50/107, H01M 50/533, H01M 50/536

(54) **ELEKTROCHEMISCHES ENERGIESPEICHERELEMENT MIT KONTAKTBLECHTEIL UND VERFAHREN ZU DESSEN HERSTELLUNG**

(71) Anmelder: VARTA Microbattery GmbH, 73479 Ellwangen Jagst (DE)
(72) Erfinder: Elmer, Martin, 73479 Ellwangen (DE)
(74) Vertreter: Ostertag & Partner Patentanwälte mbB

(57) **Zusammenfassung**

Es wird ein elektrochemisches Energiespeicherelement (100) mit einem Gehäuse vorgeschlagen. Innerhalb des Gehäuses ist ein Elektroden-Separator-Verbund (104) angeordnet. Der Elektroden-Separator-Verbund (104) umfasst eine Seite (104a, 104b), die von einem umlaufenden Rand oder mehreren Rändern begrenzt ist. Auf der Seite (104a, 104b) des Elektroden-Separator-Verbunds (104) liegt ein Kontaktblechteil (110) auf, das im Bereich der Seite mit dem Elektroden-Separator-Verbund durch Verschweißung verbunden ist. Das Energiespeicherelement (100) ist weiter dadurch gekennzeichnet, dass das Kontaktblechteil (110) mindestens ein Teil (120) umfasst, das in Richtung des Elektroden-Separator-Verbunds (104) umgebogen ist, insbesondere über den Rand oder einen die Seite begrenzenden Rand umgebogen ist.

## Beschreibung

Die vorliegende Erfindung betrifft eine elektrochemisches Energiespeicherelement mit mindestens einem Kontaktblechteil, das auf einer Stirnseite eines Elektroden-Separator-Verbunds des Energiespeicherelements aufliegt, sowie ein Verfahren zur Herstellung eines solchen elektrochemischen Energiespeicherelements.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Sie umfassen in der Regel mindestens eine Energiespeicherzelle mit einer positiven und einer negativen Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die mindestens eine elektrochemische Energiespeicherzelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute Lithium-Ionen-Zellen eingesetzt, da diese Zellen hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann.

Die negative Elektrode und die positive Elektrode bei Energiespeicherelementen werden oftmals von sogenannten Kompositelektroden gebildet, die neben elektrochemisch aktiven Komponenten auch elektrochemisch inaktive Komponenten umfassen. Die Kompositelektroden werden meist mit einem oder mehreren Separatoren zu einem Elektroden-Separator-Verbund kombiniert. Die grundsätzliche Funktionsfähigkeit der Zelle kann durch Tränkung des Verbundes mit einem Elektrolyten hergestellt werden. Alternativ kann an Stelle eines mit einem Elektrolyten getränkten Separators auch ein Festkörperelektrolyt eingesetzt werden.

In vielen Ausführungsformen von Energiespeicherelementen wird der Elektroden-Separator-Verbund in Form eines Wickels gebildet oder zu einem Wickel verarbeitet. In der Regel umfasst er die Sequenz positive Elektrode / Separator / negative Elektrode. Häufig wird der Verbund als sogenannte Bizelle mit den möglichen Sequenzen negative Elektrode / Separator / positive Elektrode / Separator / negative Elektrode oder positive Elektrode / Separator / negative Elektrode / Separator/ positive Elektrode hergestellt. In anderen Ausführungsformen wird der Elektroden-Separator-Verbund von gestapelten Elektroden mit dazwischenliegenden Separatoren oder Festkörperelektrolytschichten gebildet.

Energiespeicherelemente, die einen Elektroden-Separator-Verbund in Form eines Wickels umfassen, weisen oftmals eine zylindrische Bauform auf. Hierbei werden einerseits zylindrische Rundzellen und andererseits Knopfzellen voneinander unterschieden. Zylindrische Rundzellen zeichnen sich in der Regel dadurch aus, dass ihre Höhe größer als ihr Durchmesser ist. Knopfzellen hingegen weisen eine Höhe auf, die kleiner als der Durchmesser ist.

Knopfzellen werden zum Teil in sehr kleinen Bauformen angeboten. Sie eignen sich beispielsweise zur Versorgung von kleinen elektronischen Geräten wie Uhren, Hörgeräten, kabellosen Kopfhörern oder Ähnlichem. Sie weisen in der Regel einen maximalen Durchmesser < 3 cm auf.

Ein verbreiteter Formfaktor für zylindrische Rundzellen ist beispielsweise der Formfaktor 21 × 70 (Durchmesser x Höhe in mm). Moderne Lithium-Ionen-Zellen dieses Formfaktors können beispielsweise eine Energiedichte von bis zu 270 Wh/kg erreichen.

Das Gehäuse von Energiespeicherelementen, die einen Elektroden-Separator-Verbund aus gestapelten Elektroden aufweisen, ist meist ein prismatisches Gehäuse und zeichnet sich durch eine polygonale Grundfläche, insbesondere durch eine rechteckige Grundfläche, aus. Der Stapel umfasst in der Regel Elektroden mit ebenfalls polygonaler Grundfläche, die derart aufeinandergelegt sind, dass der Elektroden-Separator-Verbund ebenfalls prismatisch ausgebildet ist. Ein solcher prismatischer Verbund kann den Innenraum eines prismatischen Gehäuses perfekt ausfüllen. Üblicherweise sind alle Elektroden mit gleicher Polarität an einen gemeinsamen Stromleiter gekoppelt, der sie entweder elektrisch mit einem metallischen Gehäuseteil des prismatischen Gehäuses verbindet oder mit einem Pol gekoppelt ist, der durch eine entsprechende Durchbrechung aus dem Gehäuse herausgeführt ist.

In der WO 2017/215900 A1 sind Energiespeicherzellen beschrieben, bei denen die Elektroden bandförmig ausgebildet sind und der Elektroden-Separator-Verbund in Form eines Wickels vorliegt. Die Elektroden weisen jeweils mit Elektrodenmaterial beladene Stromkollektoren auf. Entgegengesetzt gepolte Elektroden sind innerhalb des Elektroden-Separator-Verbundes versetzt zueinander angeordnet, so dass Längsränder der Stromkollektoren der positiven Elektroden an einer Seite und Längsränder der Stromkollektoren der negativen Elektroden an der gegenüberliegenden Seite aus dem Wickel austreten. Zur elektrischen Kontaktierung der Stromkollektoren weist die Zelle mindestens ein Kontaktblechteil auf, das an einer Stirnseite des Elektroden-Separator-Verbundes auf einem der Längsränder aufliegt. Das Kontaktblechteil ist mit dem Längsrand durch Verschweißung verbunden. Dadurch ist es möglich, den Stromkollektor und damit auch die dazugehörige Elektrode über seine/ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden.

Das Gehäuse von elektrochemischen Energiespeicherelemente ist oft aus metallischen Bauteilen zusammensetzt. Das Gehäuse kann beispielsweise aus einem becherförmigen metallischen Gehäuseteil und einem metallischen Deckelteil gebildet sein. Die Herstellung der Energiespeicherelemente kann in diesen Fällen so erfolgen, dass der Elektroden-Separator-Verbund in Form des beschriebenen Wickels oder Stapels in das becherförmige Gehäuseteil eingesetzt wird, bevor das Gehäuse mittels des Deckelteils, das beispielsweise aufgeschweißt wird, verschlossen wird. Diese Vorgänge zur Herstellung von Energiespeicherelementen erfolgen in der Regel in automatisierter Weise im Rahmen von industriellen Fertigungsprozessen.

Um eine möglichst hohe Energiedichte des herzustellenden Energiespeicherelements zu erreichen, wird allgemein versucht, möglichst viel elektrochemisch aktives Material in das Energiespeicherelement einzubringen. Man versucht deshalb, das für den Elektroden-Separator-Verbund zur Verfügung stehende Gehäusevolumen maximal auszuschöpfen, indem man möglichst große Verbünde in Gehäuse einbringt. Beispielsweise beim Einschieben eines zylindrischen Wickels in ein becherförmiges Gehäuseteil kann dies zu Problemen führen. Wenn der der Elektroden-Separator-Verbund beim Einschieben zu stark an die Gehäuseinnenseite drückt, kann das Einschieben scheitern oder zu Schäden führen.

Diese Problematik kann durch ein auf den Elektroden-Separator-Verbund aufgeschweißtes Kontaktblechteil, wie es in der WO 2017/215900 A1 beschrieben ist, weiter verstärkt werden. Dies gilt insbesondere dann, wenn das Kontaktblechteil nicht exakt auf der jeweiligen Stirnseite des Elektroden-Separator-Verbunds platziert ist und über einen Rand der Stirnseite hinweg ragt. Das exakte, zentrierte Anordnen solcher Kontaktblechteile ist in industriellen Fertigungsprozessen nicht immer einfach, da der Umfang des Elektroden-Separator-Verbunds produktionsbedingten Schwankungen unterliegen kann, so dass sich bereits hieraus Probleme bei Auflegen und Verschweißen des Kontaktblechteils auf der Stirnseite ergeben können.

Hinzu kommt, dass bei einem nicht exakt platzierten Kontaktblechteil der Elektroden-Separator-Verbund nicht optimal bzw. in der gesamten zur Verfügung stehenden Fläche der der jeweiligen Stirnseite mit dem Kontaktblechteil verschweißt werden kann. So kann bei einem nicht optimal platzierten Kontaktblechteil beispielsweise der Fall auftreten, dass die äußeren Windungen eines zylindrischen Elektroden-Separator-Verbunds nicht mit dem Kontaktblechteil kontaktiert werden können. Dies kann den Innenwiderstand eines betroffenen Energiespeicherelements erhöhen.

Es sind bereits verschiedene Vorgehensweisen bekannt, die im Zusammenhang mit einem Einbringen eines Elektroden-Separator-Verbunds in ein Gehäuse bekannten Probleme adressieren. So schlägt die US 10505222 B2 vor, vor dem Einbringen des Elektroden-Separator-Verbunds in ein Gehäuse den Elektroden-Separator-Verbund zu komprimieren. Die EP 4053955 A1 betrifft ein Verfahren zur Herstellung eines Energiespeicherelements, bei dem ein metallisches Gehäuseteil vor dem Einbringen eines Elektroden-Separator-Verbunds erwärmt wird. Hierdurch dehnt sich das Gehäuseteil aus, so dass der Elektroden-Separator-Verbund leichter in das Gehäuseteil eingebracht werden kann. Je kleiner ein Gehäuseteil ist, desto geringer ist allerdings der Effekt der Erwärmung.

Diese Ansätze lösen jedoch nicht die oben beschriebenen Probleme, die im Zusammenhang mit einem auf der Stirnseite eines Elektroden-Separator-Verbunds platzierten Kontaktblechteils bestehen.

### AUFGABE UND LÖSUNG

Vor diesem Hintergrund stellt sich die Erfindung die Aufgabe, die exakte Platzierung eines Kontaktblechteils auf einer Stirnseite eines Elektroden-Separator-Verbunds zu erleichtern. Weiterhin soll das Einbringen des Elektroden-Separator-Verbunds in das Gehäuse des Energiespeicherelements erleichtert werden.

Diese Aufgabe wird durch ein elektrochemisches Energiespeicherelement mit den Merkmalen des Anspruchs 1 gelöst. Vorteilhafte Ausgestaltungen des Energiespeicherelements ergeben sich aus den von Anspruch 1 abhängigen Ansprüchen. Weiterhin wird diese Aufgabe durch ein Verfahren zur Herstellung eines solchen Energiespeicherelements gemäß dem Anspruch 13 gelöst. Vorteilhafte Ausgestaltungen des Herstellungsverfahrens ergeben sich aus dem weiteren abhängigen Anspruch.

Das erfindungsgemäße elektrochemisches Energiespeicherelement zeichnet sich stets durch die folgenden Merkmale aus:
a. Das elektrochemische Energiespeicherelement umfasst ein Gehäuse.
b. Innerhalb des Gehäuses ist ein Elektroden-Separator-Verbund angeordnet.
c. Der Elektroden-Separator-Verbund umfasst eine Seite, die von einem umlaufenden Rand oder mehreren Rändern begrenzt ist.
d. Auf der Seite des Elektroden-Separator-Verbunds, die von dem umlaufenden Rand oder den mehreren Rändern begrenzt ist, liegt ein Kontaktblechteil auf, das im Bereich der Seite mit dem Elektroden-Separator-Verbund durch Verschweißung verbunden ist.

Erfindungsgemäß ist das Energiespeicherelement weiter durch das folgende Merkmal gekennzeichnet:
e. Das Kontaktblechteil umfasst mindestens ein Teil, das in Richtung des Elektroden-Separator-Verbunds umgebogen ist, insbesondere über den oder einen die Seite begrenzenden Rand umgebogen ist.

Besonders bevorzugt handelt es sich bei dem mindestens Teil, das in Richtung des Elektroden-Separator-Verbunds, insbesondere über den die Seite begrenzenden Rand, umgebogen ist, um mindestens einen Fortsatz oder, in alternativer Bezeichnung, vorstehenden Bereich, der an einen Hauptbereich des Kontaktblechteils, der auf der Seite aufliegt, angeformt ist.

Besonders bevorzugt schließt der umgebogene Fortsatz oder umgebogene vorstehende Bereich mit dem Hauptbereich des Kontaktblechteils einen Biegewinkel im Bereich von 60° und 120° ein. Besonders bevorzugt ist ein Biegewinkel im Bereich von 80° bis 100°, besonders bevorzugt von 90°±5° oder exakt 90°.

Bevorzugt zeichnet sich das erfindungsgemäße Energiespeicherelement durch mindestens eines der folgenden Merkmale aus:
a. Der Elektroden-Separator-Verbund umfasst mindestens eine Anode, mindestens eine Kathode und mindestens einen Separator mit der Sequenz Anode / Separator / Kathode.
b. Der Elektroden-Separator-Verbund umfasst mindestens eine Anode, mindestens eine Kathode und mindestens eine Schicht aus einem Festelektrolyten mit der Sequenz Anode / Festelektrolyt / Kathode.
c. Das Gehäuse, in dem der Elektroden-Separator-Verbund angeordnet ist, ist ein luft- und flüssigkeitsdicht verschlossenes Gehäuse.
d. Der Elektroden-Separator-Verbund ist über das Kontaktblechteil elektrisch mit einem Teil des Gehäuses oder einem durch das Gehäuse geführten elektrischen Pol verbunden.

Das Energiespeicherelement kann ein prismatisches Gehäuse oder ein zylindrisches Gehäuse aufweisen. Im Falle eines prismatischen Gehäuses hat auch der Elektroden-Separator-Verbund bevorzugt eine im Wesentlichen prismatische Form. Im Falle eines zylindrischen Gehäuses hat der Elektroden-Separator-Verbund bevorzugt eine im Wesentlichen zylindrische Form.

Entsprechend zeichnet sich das erfindungsgemäße Energiespeicherelement in einer bevorzugten Ausführungsform durch mindestens eines der folgenden Merkmale aus:
a. Der Elektroden-Separator-Verbund wird von spiralförmig gewickelten Elektrodenbändern mit mindestens einem dazwischen liegenden Separatorenband gebildet, und der Elektroden-Separator-Verbund weist eine erste und eine zweite Stirnseite und einen dazwischen liegenden Wickelmantel auf, wobei es sich bei einer der Stirnseiten um die Seite des Elektroden-Separator-Verbunds, die von dem umlaufenden Rand begrenzt ist, handelt.
b. Die Elektrodenbänder werden von bandförmigen Stromkollektoren gebildet, die mit Elektrodenmaterial beschichtet sind.
c. Mindestens einer der bandförmigen Stromkollektoren weist einen Längsrand auf, der nicht mit Elektrodenmaterial beschichtet ist, wobei die Elektrodenbänder innerhalb des Elektroden-Separator-Verbunds derart angeordnet sind, dass der nicht mit Elektrodenmaterial beschichtete Längsrand aus der Stirnseite des Elektroden-Separator-Verbunds austritt, auf der das Kontaktblechteil aufliegt.
d. Das Kontaktblechteil ist mit dem aus der Stirnseite austretenden Längsrand verschweißt.

Bevorzugt sind die vorgenannten Merkmale a. bis d. in Kombination miteinander verwirklicht.

In dieser Ausführungsform weist das Energiespeicherelement bevorzugt ein im Wesentlichen zylindrisches Gehäuse und einen im Wesentlichen zylindrischen Elektroden-Separator-Verbund auf.

Die spiralförmig gewickelten Elektrodenbänder und das mindestens eine Separatorband weisen in typischen Fällen bevorzugt die folgenden Dimensionen auf:
- Eine Länge im Bereich von 0,5 m bis 25 m
- Eine Breite im Bereich 40 mm bis 145 mm

Zur Herstellung eines gewickelten Elektroden-Separator-Verbunds aus Elektrodenbändern und mindestens einem bandförmigen Separator werden die bandförmigen Elektroden und der mindestens eine Separator in der Regel einer Wickelvorrichtung zugeführt und in dieser bevorzugt um eine Wickelachse herum spiralförmig aufgewickelt. Eine Verklebung der Elektroden und der Separatoren oder eine Kontaktierung bei erhöhten Temperaturen ist hierbei meist nicht erforderlich. In einigen Ausführungsformen werden die Elektroden und der mindestens eine Separator auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

In einer weiteren bevorzugten Ausführungsform zeichnet sich das erfindungsgemäße Energiespeicherelement durch mindestens eines der folgenden Merkmale aus:
a. Der Elektroden-Separator-Verbund wird von gestapelten Elektroden, zwischen denen Separatoren oder Schichten aus einem Festelektrolyten angeordnet sind, gebildet.
b. Die Elektroden werden von Stromkollektoren gebildet, die mit Elektrodenmaterial beschichtet sind.
c. Die Stromkollektoren der positiven und/oder der negativen Elektroden weisen jeweils einen Stromkollektorrand auf, der nicht mit Elektrodenmaterial beschichtet ist, wobei die Elektroden innerhalb des Stapels derart angeordnet sind, dass alle nicht mit Elektrodenmaterial beschichteten Stromkollektorränder der positiven oder der negativen Elektroden aus einer Seite des Elektroden-Separator-Verbunds austreten, wobei es sich bei dieser Seite um die Seite des Elektroden-Separator-Verbunds, auf der das Kontaktblechteil aufliegt, handelt.
d. Das Kontaktblechteil ist mit den aus dieser Seite austretenden Stromkollektorrändern verschweißt.

Bevorzugt sind die sogenannten Merkmale a. bis d. in Kombination miteinander verwirklicht.

In dieser Ausführungsform weist das Energiespeicherelement bevorzugt ein im Wesentlichen prismatisches Gehäuse und einen im Wesentlichen prismatischen Elektroden-Separator-Verbund auf.

Bei dem im Wesentlichen prismatischen Elektroden-Separator-Verbund können die Stromkollektorränder der positiven und der negativen Elektroden auch aus mehr als einer Seite des Elektroden-Separator-Verbunds austreten. Beispielsweise kann es vorgesehen sein, dass positive Elektroden mit rechteckiger Grundform jeweils zwei unbeschichtete Stromkollektorränder aufweisen, die aus zwei benachbarten Seiten des Elektroden-Separator-Verbunds austreten. In diesem Fall kann das Kontaktblechteil beispielsweise L-förmig ausgebildet sein und auf beiden Seiten, aus denen die unbeschichteten Längsränder austreten, aufliegen.

Im Falle der prismatischen Form umfasst der Elektroden-Separator-Verbund bevorzugt eine Vielzahl von Elektroden mit einer rechteckigen Grundform. Wenn der Elektroden-Separator-Verbund hingegen die im Wesentlichen zylindrische Form aufweist, besteht er bevorzugt aus bandförmigen Elektroden und dem mindestens einen bandförmigen Separator, die spiralförmig aufgewickelt sind. Der Separator ist bevorzugt getränkt mit einem geeigneten Elektrolyten, wie auch die Elektroden.

Weiterhin kann der Elektroden-Separator-Verbund auch als Flachwickel mit spiralförmig aufgewickelten bandförmigen Elektroden gebildet sein und eine im Wesentlichen prismatische Form aufweisen.

Bei den Elektroden handelt es sich im Übrigen bevorzugt um Kompositelektroden, welche elektrochemisch aktive Komponenten und elektrochemisch inaktive Komponenten umfassen und deren grundsätzlicher Aufbau im einleitenden Teil bereits erläutert wurde.

Die Stromkollektoren des erfindungsgemäßen Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle eines als Lithium-Ionen-Zelle ausgebildeten erfindungsgemäßen Energiespeicherelements eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle eines als Lithium-Ionen-Zelle ausgebildeten erfindungsgemäßen Energiespeicherelements insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektorjeweils um eine Metallfolie mit einer Dicke im Bereich von 4 µm bis 30 µm.

Neben Folien können als Stromkollektoren allerdings auch andere Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Die Separatoren eines erfindungsgemäßen Energiespeicherelements werden bevorzugt aus einer elektrisch isolierenden Kunststofffolie gebildet. Diese weist bevorzugt Poren auf, so dass sie von dem flüssigen Elektrolyten durchdrungen werden kann. Die Kunststofffolie kann beispielsweise aus einem Polyolefin oder aus einem Polyetherketon bestehen. Aber auch Vliese und Gewebe aus Kunststoffmaterialien oder andere elektrisch isolierende Flächengebilde können als Separator zum Einsatz kommen.

Bevorzugt werden Separatoren eingesetzt, die eine Dicke im Bereich von 5 bis 50 µm aufweisen.

Insbesondere im Fall des prismatischen Elektroden-Separator-Verbunds können an Stelle von Separatoren auch Schichten aus dem erwähnten Festelektrolyten zum Einsatz kommen. Ein Festelektrolyt weist eine intrinsische lonenleitfähigkeit auf und muss nicht mit einem flüssigen Elektrolyten getränkt werden. Bei dem Festelektrolyten kann es sich beispielsweise um einen Polymerfestkörperelektrolyten basierend auf einem Polymer-Leitsalzkomplex, der einphasig ohne jegliche Flüssigkomponente vorliegt, handeln. Als Polymermatrix kann ein Polymerfestkörperelektrolyt Polyacrylsäure (PAA), Polyethylenglycol (PEG) oder Polymethylmethacrylat (PMMA) aufweisen. In diesen können Lithium-Leitsalze wie beispielsweise Lithium-bis-(trifluormethan)sulfonylimid (LiTFSI), Lithiumhexafluorophosphat (LlPF₆) und Lithiumtetrafluoroborat (LlBF₄) vorliegen.

Es ist bevorzugt, dass die Längsränder des oder der Separatoren oder die Längsränder der besagten Schichten aus dem Festelektrolyten die Seite oder Seiten des Elektroden-Separator-Verbunds bilden, aus der (im Fall des im Wesentlichen zylindrischen Elektroden-Separator-Verbunds) der nicht mit Elektrodenmaterial beschichtete Längsrand oder (im Fall des prismatischen Elektroden-Separator-Verbunds aus gestapelten Elektroden) alle nicht mit Elektrodenmaterial beschichteten Stromkollektorränder der positiven oder der negativen Elektroden austritt bzw. austreten.

Im Hinblick auf die Elektrochemie ist das erfindungsgemäße Energiespeicherelement nicht auf einen bestimmten Zellentyp beschränkt. In besonders bevorzugten Ausgestaltungen ist oder umfasst das Energiespeicherelement eine Lithium-Ionen-Zelle, da solche Zellen eine besonders große Energiedichte bei vergleichsweise niedrigem Gewicht bereitstellen können.

In anderen Ausführungsformen ist oder umfasst das Energiespeicherelement eine Natrium-lonen-Zelle, eine Kalium-Ionen-Zelle, eine Calcium-Ionen-Zelle, eine Magnesium-Ionen-Zelle oder eine Aluminium-Ionen-Zelle. Unter diesen Varianten sind Energiespeicherelemente mit Natrium-Ionen-Zellchemie besonders bevorzugt.

Lithium-Ionen-Zellen basieren bekanntlich auf dem Einsatz von Lithium, welches in Form von Ionen zwischen den Elektroden eines Energiespeicherelements hin und her wandern kann.

Als elektrochemisch aktive Komponenten (Aktivmaterialien) für Lithium-Ionen-Zellen kommen im Rahmen der vorliegenden Erfindung sämtliche Materialien in Frage, die Lithium-Ionen aufnehmen und wieder abgeben können. Für die negative Elektrode werden beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Die Aktivmaterialien sind in der Regel Hauptbestandteil einer Schicht, die auf den Stromkollektor aufgebracht ist. Der Stromkollektor stellt dabei eine elektrochemisch inaktive Komponente des Energiespeicherelements dar. Als Stromkollektoren sind insbesondere metallische Folien geeignet. Der Stromkollektor für die negative Elektrode (Anodenstromkollektor) einer Lithium-Ionen-Zelle kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z.B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität besagter Schicht auf den Stromkollektoren und sorgt häufig auch für die Haftung der Schicht auf den Stromkollektoren. Übliche leitfähigkeitsverbessernde Additive sind Ruß, feine Grafite, Kohlenstoff-Fasern, Carbon-Nanotubes und Metallpulver.

Als Elektrolyten für Lithium-lonen-Zellen eignen sich vor allem Lösungen von Lithiumsalzen wie Lithiumhexafluorophosphat (LiPF₆) in organischen Lösungsmitteln (z. B. Ether und Ester der Kohlensäure).

Natrium-Ionen-Zellen basieren bekanntlich auf dem Einsatz von Natrium, welches in Form von Ionen zwischen den Elektroden eines Energiespeicherelements hin und her wandern kann.

Als elektrochemisch aktive Komponenten (Aktivmaterialien) für Natrium-lonen-Zellen kommen im Rahmen der vorliegenden Erfindung anodenseitig beispielsweise die folgenden Materialien in Frage:
- Kohlenstoff, besonders präferiert Hardcarbon (rein oder mit Stickstoff- und/oder Phosphor-Dotierung) oder Softcarbon oder Graphen-basierte Materialien (beispielsweise mit N-Dotierung); Kohlenstoff-Nanotubes, Graphit
- Polyanionen wie Na₂Ti₃O7, Na₃Ti₂(PO₄)₃, TiP₂O₇, TiNb₂O₇, Na-Ti-(PO₄)₃, Na-V-(PO₄)₃
- Übergangsmetalloxide: V₂O₅, MnO₂, TiO₂, Nb₂O₅, Fe₂O₃, Na₂Ti₃O₇, NaCrTiO₄, Na₄Ti₅O₁₂

Kathodenseitig kommen beispielsweise die folgenden Materialien in Frage:
- Polyanionen: NaFePO₄ (Triphylit-Typ), Na₂Fe(P₂O₇), Na₄Fe₃(PO₄)₂(P₂O₇), Na₂FePO₄F, Na/Na₂[Fe_{1/2}Mn_{1/2}]PO₄F, Na₃V₂(PO₄)₂F₃, Na₃V₂(PO₄)₃, Na₄(CoMnNi)₃(PO₄)₂P₂O₇, NaCoPO₄, Na₂CoPO₄F
- Silikate: Na₂MnSiO₄, Na₂FeSiO₄
- Schichtoxide: NaCoO₂, NaFeO₂, NaNiO₂, NaCrO₂, NaVO₂, NaTiO₂, Na(FeCo)O₂, Na(Ni-FeCo)₃O₂, Na(NiFeMn)O₂, Na(NiFeCoMn)O₂, Na(NiMnCo)O₂

Daneben enthalten auch die Elektroden eines erfindungsgemäßen Energiespeicherelements auf der Basis von Natrium-Ionen bevorzugt einen der genannten Elektrodenbinder und/oder eines leitfähigkeitsverbessernden oder sonstigen Additive.

Besonders bevorzugt bestehen bei einer Natrium-Ionen-Energiespeicherzelle sowohl der Anoden- als auch der Kathodenstromkollektor aus Aluminium oder einer Aluminiumlegierung.

Energiespeicherelemente auf der Basis von Natrium-lonen-Technologie weisen vorzugsweise einen Elektrolyten mit mindestens einem Lösungsmittel und mindestens einem Leitsalz auf.

Als Lösungsmittel kommen insbesondere organische Carbonate, Ether, Nitrile und Mischungen daraus in Frage.

Bevorzugte Leitsalze sind NaPF₆, Natrium-difluoro(oxalato)borat (NaBOB), NaBF₄, Natrium-bis(fluorosulfonyl)imid (NaFSI), Natrium-2-trifluoromethyl-4,5-dicyanoimidazol (NaTDI), Natrium-bis(trifluoromethansulfonyl)imid (NaTFSI), NaAsF₆, NaBF₄, NaClO₄, NaB(C₂O₄)₂, NaP(C₆H₄O₂)₃; NaCF₃SO₃, Natriumtriflat (NaTf) und Et₄NBF₄.

Dem Elektrolyten von Natrium-Ionen-Zellen können in bevorzugten Ausführungsformen Additive zugesetzt sein. Beispiele bevorzugter Additive, insbesondere zur Stabilisierung, sind die folgenden: Fluoroethylencarbonat (FEC), Transdifluoroethylencarbonat (DFEC), Ethylensulfit (ES), Vinylencarbonat (VC), Bis(2,2,2-trifluoroethyl)ether (BTFE), Natrium-2-trifluoromethyl-4,5-dicyanoimidazol (NaTDI), Natriumbis(fluorosulfonyl)imide (NaFSI), Aluminumchlorid (AlCl₃), Ethylensulfat (DTD), Natriumdifluorophosphat (NaPO₂F₂), Natriumdifluoro(oxalato)borat (NaODFB), Natriumdifluorobisoxalatophosphat (NaDFOP) und Tris(trimethylsilyl)borat (TMSB).

In bevorzugten Ausführungsformen zeichnet sich das erfindungsgemäße Energiespeicherelement durch mindestens eines der folgenden Merkmale aus:
a. Das umgebogene Teil des Kontaktblechteils, insbesondere der Fortsatz oder vorstehende Bereich, der an einen Hauptbereich des Kontaktblechteils angeformt ist, liegt im Bereich des äußeren Umfangs des Kontaktblechteils, insbesondere des äußeren Umfangs des Hauptbereichs des Kontaktblechteils.
b. Das Kontaktblechteil umfasst mindestens zwei, bevorzugt 2 bis 100, besonders bevorzugt drei oder vier Teile, insbesondere Fortsätze oder vorstehenden Bereiche, die in Richtung des Elektroden-Separator-Verbunds, insbesondere über einen Rand der Seite, auf der das Kontaktblechteil aufliegt, umgebogen sind.

Der besondere Vorteil des erfindungsgemäßen Energiespeicherelements liegt vor allem darin, dass das umgebogene Teil oder die umgebogenen Teile die genaue Platzierung und gegebenenfalls Zentrierung des Kontaktblechteils auf der Stirnseite des Elektroden-Separator-Verbunds wesentlich erleichtern können. Dies gilt insbesondere, wenn das Kontaktblechteil zwei oder, besonders bevorzugt, drei oder mehr der umgebogenen Teile aufweist. Durch die umgebogenen Teile kann eine korrekte Platzierung erzwungen und eine nicht korrekte Platzierung sicher vermieden werden. Auch wenn das Kontaktblechteil zunächst möglicherweise nicht korrekt auf der Stirnseite des Elektroden-Separator-Verbunds aufgelegt wurde, kann es mit Hilfe der Fortsätze oder vorstehenden Bereiche derart auf der Stirnseite des Elektroden-Separator-Verbunds ausgerichtet werden, dass es plan und zentriert auf der Stirnseite des Elektroden-Separator-Verbunds aufliegt. Es können hierdurch produktionsbedingte Schwankungen in der Größe und Form der Stirnseite ausgeglichen werden, so dass es bei der nachfolgenden Verarbeitung des mit dem Kontaktblechteil versehenen Elektroden-Separator-Verbunds nicht zu Schwierigkeiten kommt. Die exakte Platzierung des auf die Stirnseite aufgesetzten Kontaktblechteils vereinfacht das anschließende Einbringen des Elektroden-Separator-Verbunds in ein beispielsweise becherförmiges Gehäuseteil. Dies erlaubt eine Maximierung des Durchmessers oder allgemein der Dimensionen des Elektroden-Separator-Verbunds, so dass im Vergleich zu herkömmlichen Energiespeicherelementen die Energiedichte des erfindungsgemäßen Energiespeicherelements erhöht werden kann.

Es ist auch denkbar, dass der mindestens eine Fortsatz oder vorstehende Bereich in mehr als einem Schritt umgebogen wird. So ist es beispielsweise möglich, den Fortsatz oder vorstehende Bereich einem ersten Biegeprozess (Vorbiegung) zu unterwerfen, der beispielsweise zu einer Biegung in Richtung des Elektroden-Separator-Verbunds mit einem Biegewinkel von 30° bis 55° führt, und in einem weiteren Schritt einem zweiten Biegeprozess zu unterwerfen, der beispielsweise zu einer Biegung in Richtung des Elektroden-Separator-Verbunds mit einem Biegewinkel von 60° bis 120° führt.

In bevorzugten Ausführungsformen wird die Vorbiegung vorgenommen, bevor das Kontaktblechteil auf die Stirnseite des Elektroden-Separator-Verbunds aufgelegt wird, und die weitere Biegung, nachdem das Kontaktblechteil auf die Stirnseite des Elektroden-Separator-Verbunds aufgelegt wird. Die weitere Biegung kann beispielsweise beim Einbringen des Elektroden-Separator-Verbunds in das erwähnte becherförmige Gehäuseteil durch entsprechenden Kontakt mit der Innenseite des becherförmigen Gehäuseteils beim Einbringen erfolgen.

Grundsätzlich ist es möglich, dass das Kontaktblechteil zwei Fortsätze oder vorstehende Bereich aufweist, bei denen die Biegeprozesse zu unterschiedlichen Biegeergebnissen geführt haben. So kann beispielsweise ein Fortsatz oder vorstehender Bereich mit einem größeren Biegewinkel umgebogen sein als ein anderer. Dies kann beispielsweise auftreten, wenn ein Kontaktblechteil nicht exakt mittig auf einer Stirnseite eines Elektroden-Separator-Verbunds aufgelegt wird. Beim Einführen eines Elektroden-Separator-Verbunds in ein Gehäuseteil kann dann ein Fortsatz stärker umgebogen werden als eine anderer.

Durch die erfindungsgemäßen Maßnahmen kann zudem die Ausschussrate bei der Bildung der Schweißverbindung zwischen dem Elektroden-Separator-Verbund und dem Kontaktblechteil verbessert werden.

Die besonderen Vorteile der erfindungsgemäßen Maßnahmen kommen vor allem bei einem Energiespeicherelement mit einem zylindrischen Elektroden-Separator-Verbund und einem zylindrischen Gehäuse zum Tragen, da hier die Zentrierung des Kontaktblechteils auf der Stirnseite des Elektroden-Separator-Verbunds im Produktionsprozess besondere Schwierigkeiten bereitet. Dennoch können die Vorteile der erfindungsgemäßen Maßnahmen auch bei einem Energiespeicherelement mit prismatischem Gehäuse und prismatischen Elektroden-Separator-Verbund genutzt werden.

In besonders bevorzugten Ausführungsformen des erfindungsgemäßen Energiespeicherelements ist das Kontaktblechteil gemäß mindestens einem der folgenden zusätzlichen Merkmale ausgebildet:
a. Das Kontaktblechteil weist besagten Hauptbereich auf, an den der Fortsatz oder vorstehende Bereich angeformt ist oder an den die Fortsätze oder vorstehenden Bereiche angeformt sind.
b. Der Hauptbereich weist mindestens einen runden oder einen geraden äußeren Rand auf, von dem der Fortsatz oder vorstehende Bereich oder die Fortsätze oder vorstehenden Bereiche absteht oder abstehen.
c. Der maximale Erstreckungslänge des Hauptbereichs des Kontaktblechteils ist kleiner als die maximale Erstreckungslänge der Seite des Elektroden-Separator-Verbunds, auf der das Kontaktblechteil aufliegt.

Form und Größe des Hauptbereichs des Kontaktblechteils sind zweckmäßigerweise an die Form und Größe der Seite des Elektroden-Separator-Verbunds, auf dem das Kontaktblechteil aufliegt, angepasst, da dieses den aus der Seite austretenden Stromkollektorrand möglichst über seine gesamt Länge kontaktieren soll. Bei einem Elektroden-Separator-Verbund in Form eines zylindrischen Wickels weist das Kontaktblechteil in bevorzugten Ausführungsformen beispielsweise einen scheibenförmigen Hauptbereich mit einem kreisförmigen äußeren Rand auf, der der Form der abzudeckenden Stirnseite entspricht. Wenn der Elektroden-Separator-Verbund ein prismatischer Wickel ist oder beispielsweise eine prismatischen Elektroden-Stapel umfasst und die von dem Hauptbereich abzudeckende Seite eine polygonale Grundform aufweist, ist es bevorzugt, dass das Kontaktblechteil einen polygonalen Hauptbereich aufweist.

Besonders bevorzugt ist der äußere Rand des Hauptbereichs ein umlaufender Rand, insbesondere im Falle zylindrischer Wickel besonders bevorzugt ein kreisförmiger umlaufender Rand.

Die maximale Erstreckungslänge des Hauptbereichs des Kontaktblechteils ist definiert als größtmöglicher Abstand zweier Punkte auf dem äußeren Rand des Hauptbereichs.

Die maximale Erstreckungslänge der Seite des Elektroden-Separator-Verbunds ist definiert als größtmöglicher Abstand zweier Punkte auf dem die Seite begrenzenden Rand oder auf den die Seite begrenzenden Rändern.

In besonders bevorzugten Ausführungsformen des erfindungsgemäßen Energiespeicherelements zeichnet sich dieses im Hinblick auf das mindestens eine umgebogene Teil des Kontaktblechteils durch mindestens eines der folgenden zusätzlichen Merkmale aus:
a. Das mindestens eine umgebogene Teil weist eine Rechteckform oder eine Streifenform auf;
b. Das mindestens eine umgebogene Teil weist eine Dreiecksform auf;
c. Das mindestens eine umgebogene Teil weist einen halbkreisförmigen Umriss auf oder umfasst ein abgerundetes Endstück, insbesondere ein Endstück mit einem halbkreisförmigen Umriss.
d. Das Kontaktblechteil umfasst mehrere umgebogene Teile, zwischen denen Einschnitte, insbesondere gekerbte Einschnitte, vorgesehen sind.
e. Das Kontaktblechteil umfasst mehrere umgebogene Teile, zwischen denen gebuchtete Einschnitte vorgesehen sind.
f. Das Kontaktblechteil umfasst mehrere umgebogene Teile, wobei die umgebogenen Teile in regelmäßigen Abständen an den mindestens einen äußeren Rand des Hauptbereichs angeformt sind.

Prinzipiell kann das umgebogene Teil verschiedene Formen und Ausgestaltungen aufweisen. Besonders bevorzugt ist eine Rechteckform oder eine Dreiecksform gemäß den vorgenannten Merkmalen a. oder b.

Wenn mehrere umgebogene Teile vorhanden sind, sind die umgebogenen Teil bevorzugt in gleichen Abständen über den gesamten äußeren Rand des Hauptbereichs verteilt. Die umgebogene Teile können auch direkt nebeneinander liegen. Wenn die umgebogenen Teile direkt nebeneinander liegen, können zwischen ihnen gemäß den vorgenannten Merkmalen d. oder e. gekerbte Einschnitte oder gebuchtete Einschnitte vorgesehen sein.

Vorzugsweise bestehen das mindestens eine umgebogene Teil, bevorzugt die mindestens zwei umgebogenen Teile, aus dem gleichen Material wie der Hauptbereich. Theoretisch wäre es möglich, die Teile separat zu fertigen und an dem Hauptbereich zu fixieren. Sehr viel einfacher lässt sich das Kontaktblechteil aber einschließlich der angeformten Fortsätze oder vorstehenden Bereiche einstückig fertigen, beispielsweise als Stanzteil. Die Stanzformen sind dann bevorzugt so ausgebildet, dass die Kontaktblechteile zusammen mit den Fortsätzen in einem Arbeitsgang aus einem Blech ausgestanzt werden können. Das Umbiegen wird dann bevorzugt im Anschluss vorgenommen, worauf unten noch näher Bezug genommen wird.

Im Hinblick auf den mindestens einen Fortsatz oder vorstehenden Bereich zeichnet sich das erfindungsgemäße Energiespeicherelement vorzugsweise durch das folgende zusätzliche Merkmal aus:
a. Der mindestens eine Fortsatz oder vorstehende Bereich steht mindestens 0,1 und maximal 1 mm von dem äußeren Rand des Hauptbereichs ab.

Besonders bevorzugt steht der mindestens eine Fortsatz oder vorstehende Bereich mindestens 0,1 und maximal 0,5 mm von dem äußeren Rand des Hauptbereichs ab.

Die genannten Werte beziehen sich vorzugsweise auf einen Zustand des Kontaktblechteils, in dem der mindestens eine Fortsatz oder vorstehende Bereich noch nicht umgebogen sind.

Im Hinblick auf die genannten Vorteile der erfindungsgemäßen Maßnahmen ist bereits eine sehr kurze Länge der Fortsätze bzw. vorstehenden Bereiche des Kontaktblechteils, also insbesondere eine Länge in einem Bereich von weniger als 1 mm, ausreichend. Die Länge der Fortsätze kann bevorzugt so gewählt sein, dass die Fortsätze bzw. vorstehenden Bereiche nach ihrer Umformung ausschließlich mit den unbeschichteten Längsrändern des oder Stromkollektoren in Kontakt kommen, an den oder die das Kontaktblechteil geschweißt ist. Es ist aber auch möglich, dass die Länge derart gewählt wird, dass die Fortsätze bzw. vorstehenden Bereiche bis in den mit Elektrodenmaterial beschichteten Bereich der Stromkollektoren ragen.

Bevorzugt ist der maximale Überstand des mindestens einen Fortsatzes oder vorstehenden Bereichs ausgehend von dem äußeren Rand des Hauptbereichs kleiner als der minimale Abstand des Hauptbereichs von der Stirnseite, aus der der oder die Längsränder austreten.

In bevorzugten Ausgestaltungen des erfindungsgemäßen Energiespeicherelements zeichnet sich das Kontaktblechteil durch das folgende zusätzliche Merkmal aus:
a. Das Kontaktblechteil weist eine vorzugsweise gleichmäßige Dicke in einem Bereich von 50 µm bis 600 µm auf, insbesondere in einem Bereich von 100 µm bis 500 µm, vorzugsweise 200 µm oder 300 µm.

Eine Dicke des Kontaktblechteils von 200 µm eignet sich insbesondere für eine Kontaktierung mit der Anode bzw. den negativen Elektroden und eine Dicke des Kontaktblechteils von 300 µm eignet sich insbesondere für eine Kontaktierung mit der Kathode bzw. den positiven Elektroden.

In besonders bevorzugten Ausführungsformen des erfindungsgemäßen Energiespeicherelements zeichnet sich das Kontaktblechteil durch das folgende zusätzliche Merkmal aus:
a. Das Kontaktblechteil weist mindestens eine Sicke auf, die auf einer Flachseite des Kontaktblechteils als längliche Vertiefung und auf der gegenüberliegenden Flachseite als längliche Erhöhung ausgebildet ist, wobei das Kontaktblechteil mit der Flachseite, welche die längliche Erhöhung trägt, dem Elektroden-Separator-Verbund zugewandt ist.

Weiterhin kann sich das erfindungsgemäße Energiespeicherelement in bevorzugten Ausführungsformen durch mindestens eines der folgenden zusätzlichen Merkmale auszeichnen:
a. Das Kontaktblechteil ist im Bereich der mindestens einen Sicke mit dem Elektroden-Separator-Verbund verschweißt.
b. Die Verschweißungen sind linienförmig.
c. Die Verschweißungen werden von zwei oder mehr parallelen Schweißlinien pro Sicke gebildet.

Vorzugsweise sind die vorgenannten Merkmale a. und b. und, besonders bevorzugt, die vorgenannten Merkmale a. bis c. in Kombination miteinander realisiert.

Durch eine Verschweißung des Kontaktblechteils im Bereich der mindestens einen Sicke mit dem Elektroden-Separator-Verbund kann die Stabilität der Verschweißung und allgemein der Schweißkontakt mit den Elektroden weiter verbessert werden.

Bevorzugt weist das Kontaktblechteil zwei oder drei oder mehr Sicken auf.

Es kann vorgesehen sein, dass die Sicken einen zentralen Bereich des Kontaktblechteils aussparen. In diesem zentralen Bereich des Kontaktblechteils kann in bevorzugten Ausführungsformen eine Durchbrechung, beispielsweise in Form eines runden Lochs, vorgesehen sein. Diese Durchbrechung in dem Kontaktblechteil kann zum Einfüllen einer Elektrolytflüssigkeit genutzt werden.

Es hat sich in einigen Ausführungsformen als vorteilhaft erwiesen, den aus der Stirnseite des Elektroden-Separator-Verbunds herausragenden Längsrand des jeweiligen Stromkollektors einer Vorbehandlung zu unterziehen, bevor das Kontaktblechteil aufgesetzt wird. Insbesondere kann in den Längsrand mindestens eine Vertiefung eingefalzt werden, die zu der mindestens einen Sicke bzw. der länglichen Erhöhung auf der dem Elektroden-Separator-Verbund zugewandten Flachseite des Kontaktblechteils korrespondiert.

Der Längsrand des Stromkollektors kann auch durch eine Vorbehandlung einer gerichteten Umformung unterzogen worden sein. Beispielsweise kann er in eine definierte Richtung umgebogen sein.

In besonders bevorzugten Ausführungsformen des erfindungsgemäßen Energiespeicherelements zeichnet sich das Kontaktblechteil durch das folgende zusätzliche Merkmal aus:
a. Das Kontaktblechteil weist mindestens einen Fortsatz oder vorstehenden Bereich auf, der an den Bereich einer Sicke angrenzt.

Diese Ausführungsform hat den Vorteil, dass die Fortsätze bzw. vorstehenden Bereiche in besonders einfacher Weise umgebogen werden können. Da die Sicke eine rinnenförmige Vertiefung auf derjenigen Flachseite des Kontaktblechteils, die dem Elektroden-Separator-Verbund abgewandt ist, ausbildet, liegt auch der angrenzende Fortsatz bzw. vorstehende Bereiche auf einer tieferen Ebene als die übrigen Bereiche des Kontaktblechteils. Hierdurch wird eine Soll-Biegelinie für das Umbiegen der Fortsätze bzw. vorstehenden Bereiche vorgegeben, so dass das Umbiegen erleichtert wird.

Das Kontaktblechteil kann mit dem Anodenstromkollektor oder dem Kathodenstromkollektor eines Energiespeicherelements elektrisch verbunden sein. Wie in der WO 2017/215900 A1 erläutert, hat die Verwendung eines Kontaktblechteils den Vorteil, dass die Elektroden entlang ihrer jeweiligen Längsränder mit dem Kontaktblechteil in Kontakt stehen. Hierdurch kann allgemein der Innenwiderstand des Energiespeicherelements gesenkt werden, so dass das Auftreten größer Ströme im Vergleich mit klassischen Energiespeicherelementen viel besser abgefangen werden kann.

Ein Kontaktblechteil, das zur elektrischen Verbindung mit einem Anodenstromkollektor des Elektroden-Separator-Verbunds, insbesondere bei einer Lithium-Ionen-Zelle, vorgesehen ist, kann sich durch mindestens eines der folgenden Merkmale auszeichnen:
a. Das Kontaktblechteil besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Kontaktblechteil und der Anodenstromkollektor bestehen aus dem gleichen Material.

Ein Kontaktblechteil, das für eine elektrische Kontaktierung mit dem Kathodenstromkollektor des Elektroden-Separator-Verbunds vorgesehen ist, insbesondere bei einer Lithium-Ionen-Zelle, kann sich vorzugsweise durch mindestens eines der folgenden Merkmale auszeichnen:
a. Das Kontaktblechteil besteht aus Aluminium oder einer Aluminiumlegierung.
b. Das Kontaktblechteil und der Kathodenstromkollektor bestehen aus dem gleichen Material.

Als Aluminiumlegierungen kommen für das Kontaktblechteil beispielsweise Al-Legierungen vom Typ 1235, 1050, 1060, 1070, 3003, 5052, Mg3, Mg212 (Serie 3000) und GM55 in Frage. Weiterhin geeignet sind AlSi, AlCuTi, AlMgSi, AISiMg, AlSiCu, AlCuTiMg und AlMg. Der Aluminiumanteil besagter Legierungen liegt bevorzugt oberhalb von 99,5 %.

Weiterhin kann sich das Kontaktblechteil durch mindestens eines der unmittelbar folgenden Merkmale auszeichnen:
a. Das Kontaktblechteil weist zwei sich gegenüberliegenden Flachseiten auf und erstreckt sich im Wesentlichen nur in einer Dimension.
b. Das Kontaktblechteil ist eine Scheibe oder eine polygonale Platte.
c. Das Kontaktblechteil ist derart dimensioniert, dass es mindestens 40 % der Stirnseite des Elektroden-Separator-Verbunds, auf der es aufliegt, bevorzugt mindestens 50 %, bevorzugt mindestens 60 %, bevorzugt mindestens 70 %, besonders bevorzugt mindestens 80 %, abdeckt.

Vorzugsweise sind die vorgenannten Merkmale a. und b. oder a. und c. oder b. und c. oder, besonders bevorzugt, die unmittelbar vorgenannten Merkmale a. bis c., in Kombination miteinander verwirklicht.

Die möglichst großflächige Abdeckung der Stirnseite des Elektroden-Separator-Verbunds mit dem Kontaktblechteil ist für das thermische Management des erfindungsgemäßen Energiespeicherelements vorteilhaft. Je größer die Abdeckung ist, desto eher ist es möglich, möglichst lange Abschnitte der jeweiligen Elektroden zu kontaktieren. In dem Elektroden-Separator-Verbund gebildete Wärme kann so besonders gut über das Kontaktblechteil zum Gehäuse abgeführt werden.

Das Gehäuse ist bevorzugt aus einem becherförmigen metallischen Gehäuseteil und einem zumindest teilweise aus Metall bestehenden Deckelteil gebildet. Das becherförmige Gehäuseteil kann beispielsweise in einem Tiefziehprozess gebildet sein. Es ist aber auch möglich, es durch Einschweißen eines Bodens in ein rohrförmiges Gehäuseteil herzustellen. Die beiden Gehäuseteile können über eine Dichtung miteinander verbunden sein, die elektrisch isolierende Eigenschaften hat und die beiden Gehäuseteile elektrisch voneinander isoliert. Es ist auch möglich, die beiden Gehäuseteile durch Verschweißung miteinander zu verbinden. In diesem Fall ist in der Regel ein gegen das Gehäuse isolierter metallischer Pol durch eine Durchbrechung im Gehäuse nach außen geführt.

Der elektrische und thermische Kontakt der Elektroden mit dem Gehäuse bzw. mindestens einem der Gehäuseteile erfolgt über das Kontaktblechteil. Das Kontaktblechteil selbst kann beispielsweise über einen Stromleiter oder über eine direkte Verschweißung mit einem Gehäuseteil oder gegebenenfalls dem metallischen Pol elektrisch verbunden werden.

Die Gehäuseteile können beispielsweise aus Aluminium, einer Aluminiumlegierung oder einem Stahlblech, beispielsweise einem vernickelten Stahlblech, bestehen. Geeignete Aluminiumlegierungen für das becherförmige metallische Gehäuseteil sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AISiMg, AlSiCu, AlCuTiMg und AlMg. Der Aluminiumanteil besagter Legierungen liegt bevorzugt oberhalb von 99,5%.

Die Erfindung umfasst weiterhin ein Verfahren zur Herstellung des beschriebenen elektrochemischen Energiespeicherelements mit den folgenden Verfahrensschritten:
a. Es wird ein Elektroden-Separator-Verbund (104) mit mindestens einer Seite, die von einem umlaufenden Rand oder mehreren Rändern begrenzt ist, bereitgestellt.
b. Auf diese Seite des Elektroden-Separator-Verbunds wird ein Kontaktblechteil (110) aufgelegt, wobei das Kontaktblechteil mindestens einen Fortsatz oder vorstehenden Bereich (120) aufweist.
c. Der mindestens eine Fortsatz oder vorstehende Bereich (120) wird in Richtung des Elektroden-Separator-Verbunds umgebogen, insbesondere über den Rand oder die Ränder, die die Seite begrenzen.
d. Vor oder nach dem Umbiegen des mindestens einen Fortsatzes oder vorstehenden Bereichs (120) wird das Kontaktblechteil (130) im Bereich der Stirnseite mit dem Elektroden-Separator-Verbund durch Verschweißung verbunden.
e. Es wird ein becherförmiges Gehäuseteil (101) mit einer Öffnung sowie ein Deckelteil (102) für das Gehäuse des Energiespeicherelements bereitgestellt.
f. Der Elektroden-Separator-Verbund (104) mit dem Kontaktblechteil (110) wird in das becherförmige Gehäuseteil (101) eingebracht.
g. Die Öffnung des becherförmigen Gehäuseteils (101) wird mit dem Deckelteil (102) verschlossen.
h. Vor und/oder nach dem Verschließen der Öffnung des becherförmigen Gehäuseteils mit dem Deckelteil werden die Elektroden des Elektroden-Separator-Verbunds (104) mit Teilen des Gehäuses und/oder einer Poldurchführung elektrisch kontaktiert.

Die im Rahmen des Verfahrens zum Einsatz kommenden Funktionsteile wurden sämtlich bereits im Zusammenhang mit dem erfindungsgemäßen Energiespeicherelement erläutert. Auf die entsprechenden Ausführungen wird hiermit Bezug genommen.

Bei dem Verfahren zur Herstellung der erfindungsgemäßen Energiespeicherelemente wird das Kontaktblechteil in Schritt a. bevorzugt zunächst derart auf die Seite des Elektroden-Separator-Verbunds aufgelegt, dass der mindestens eine Fortsatz oder vorstehende Bereich des Kontaktblechteils über den die Seite begrenzenden Rand oder die die Seite begrenzenden Ränder hinausstehen. Im Verlauf des weiteren Verfahrens werden der mindestens eine Fortsatz oder vorstehende Bereich in Richtung des Elektroden-Separator-Verbunds umgebogen, so dass das Kontaktblechteil die Seite des Elektroden-Separator-Verbunds, auf der es aufliegt, mit dem mindestens einen umgebogenen Fortsatz oder vorstehenden Bereich umgreift. Im Idealfall ist der mindestens eine Fortsatz oder vorstehenden Bereich derart umgebogen, dass er in einem 90°-Winkel zum Hauptbereich des Kontaktblechteils steht. Das Einfügen des Elektroden-Separator-Verbunds mit einem derartigen Kontaktblechteil in das becherförmige Gehäuseteil ist gegenüber herkömmlichen Verfahren deutlich erleichtert.

Das Umgreifen hat weiterhin den Vorteil, dass sich ein außenliegender Stromkollektorrand nicht mehr an dem Kontaktblechteil vorbeischieben kann.

Vor oder nach dem Umbiegen kann das Kontaktblechteil mit dem oder den Stromkollektorrändern verschweißt werden, die aus der Seite des Elektroden-Separator-Verbunds herausragen, auf der das Kontaktblechteil aufliegt.

Alternativ zu dem vorgenannten Schritt c., gemäß dem der mindestens eine Fortsatz oder vorstehende Bereich in Richtung des Elektroden-Separator-Verbunds umgebogen wird, ist es auch möglich, den mindestens einen Fortsatz oder vorstehenden Bereich bereits vor dem Auflegen des Kontaktblechteils auf die Stirnseite des Elektroden-Separator-Verbunds zu biegen.

Das Verschließen des becherförmigen Gehäuseteils gemäß dem vorgenannten Schnitt g. mit dem Deckelteil kann in an sich bekannterweise Weise erfolgen, beispielsweise durch Verschweißen, insbesondere Laserschweißen, oder gegebenenfalls durch Bördeln oder Kleben.

Der Elektroden-Separator-Verbund kann vor oder nach dem Verschließen der Öffnung des becherförmigen Gehäuseteils mit dem Deckelteil mit einem Elektrolyten versetzt werden. Hierfür kann beispielsweise in dem Boden des becherförmigen Gehäuseteils eine Öffnung vorgesehen sein, über die der Elektrolyt in das Innere des Gehäuses eingebracht wird. Anschließend kann diese Aktivierungsöffnung wieder mit einer Scheibe oder ähnlichem verschlossen werden, beispielsweise durch Kleben oder Schweißen.

In besonders bevorzugten Ausführungsformen des erfindungsgemäßen Verfahrens wird das der Elektroden-Separator-Verbund mit dem Kontaktblechteil in das becherförmige Gehäuseteil eingeschoben, bis das Kontaktblechteil in unmittelbarem Kontakt mit dessen Boden steht. Das becherförmige Gehäuseteil ist oft elektrisch mit der Anode gekoppelt und somit negativ gepolt. Das Kontaktblechteil mit den umgeformten Fortsätzen wirkt als Einführhilfe, so dass die Montage erleichtert wird. In einem Folgeschritt können der Boden und das Kontaktblechteil durch Verschweißung verbunden werden.

Auch der kathodenseitige Einsatz des beschriebenen Kontaktblechteils kann vorteilhaft sein. Die Abrundung bzw. Flächenvergrößerung durch die Fortsätze kann das Risiko eines Kurzschlusses verringern, das in Folge einer potentiellen Beschädigung einer zwischen dem Rand des Kontaktblechteils und der Innenwand eines Gehäuseteil angeordneten Isolierung besteht.

Insgesamt wird durch die erfindungsgemäßen Maßnahmen die Prozessstabilisierung des Wickels beim Fügen in ein Gehäuseteil erhöht, da auch nicht zentrisch aufgesetzte Kontaktblechteile prozessiert werden können.

Durch die erhöhte Präzision beim Aufsetzen und Fixieren der Kontaktblechteile auf den jeweiligen Stirnseiten der Elektroden-Separator-Verbünde ist es weiterhin möglich, dass die Verschweißung (z. B. Laserlinien) bis zum äußeren Bereich der jeweiligen Stirnseite des Elektroden-Separator-Verbunds geführt werden kann, so dass auch äußere Lagen des Elektroden-Separator-Verbunds besser angebunden werden.

### KURZBESCHREIBUNG DER ZEICHNUNGEN

Weitere Merkmale und Vorteile der Erfindung ergeben sich aus der nachfolgenden Beschreibung von bevorzugten Ausführungsbeispielen in Verbindung mit den Zeichnungen.

In den Figuren zeigen:
- Fig. 1: Längsschnitt durch eine schematische Darstellung einer bevorzugten Ausführungsform eines erfindungsgemäßen Energiespeicherelements;
- Fig. 2: Aufsicht auf zwei bevorzugte Ausführungsformen von Kontaktblechteilen (Teilfiguren A und B) gemäß der Erfindung;
- Fig. 3: Aufsicht auf zwei weitere bevorzugte Ausführungsformen von Kontaktblechteilen (Teilfiguren A und B) gemäß der Erfindung;
- Fig. 4: schematische Schnittdarstellung zur Illustrierung der Anbindung eines Kontaktbauteils an einen Elektroden-Separator-Verbund gemäß der Erfindung; und
- Fig. 5: einen Elektroden-Separator-Verbund, der beispielsweise in einem Energiespeicherelements gemäß Fig. 1 verbaut werden kann, sowie dessen Komponenten.

### BESCHREIBUNG BEVORZUGTER AUSFÜHRUNGSBEISPIELE

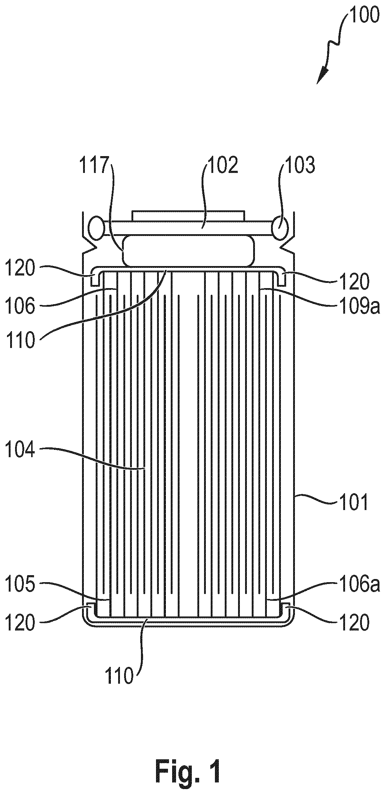

Bei der in **Fig. 1** gezeigten Ausführungsform eines erfindungsgemäßen Energiespeicherelements umfasst das Energiespeicherelement 100 ein Gehäuse, das im Wesentlichen von einem becherförmigen Gehäuseteil 101 und einem Deckelteil 102 gebildet ist. Das becherförmige Gehäuseteil 101 weist im oberen Teil der Darstellung eine kreisrunde Öffnung auf, die mit dem Deckelteil 102 verschlossen ist. Zwischen dem Öffnungsrand des becherförmigen Gehäuseteils 101 und dem Deckelteil 102 ist eine elektrisch isolierende Dichtung 103 vorgesehen, die die Gehäuseteile 101 und 102 elektrisch voneinander isoliert und das Gehäuse abdichtet.

Im Inneren des Gehäuses befindet sich ein gewickelter Elektroden-Separator-Verbund 104, bei dem es sich um einen zylindrischen Wickel aus spiralförmig aufgewickelten bandförmigen Elektroden und mindestens einem bandförmigen Separator handelt. Bei den Elektroden handelt es sich um Kompositelektroden, die jeweils aus einem mit einem Elektrodenmaterial beschichteten bandförmigen Stromkollektor gebildet sind. Der Elektroden-Separator-Verbund 104 weist eine dem Deckelteil 102 zugewandte obere Stirnseite und eine dem Boden des Gehäuseteils 101 zugewandte untere Stirnseite auf. Aus diesen tritt jeweils ein nicht mit Elektrodenmaterial beschichteter freier Längsrand 106a bzw. 109a der von den Elektroden umfassten Stromkollektoren aus. Beispielsweise kann aus der unteren Stirnseite der freie Längsrand 106a des Anodenstromkollektors und aus der oberen Stirnseite des Elektroden-Separator-Verbunds der freie Längsrand 109a des Kathodenstromkollektors austreten. Die Schichten aus den Elektrodenmaterialien sowie die zwischen den Elektroden angeordneten Separatorenbänder sind der Übersichtlichkeit halber in dieser Darstellung nicht gezeigt.

Vorliegend ist auf beiden Stirnseiten des Elektroden-Separator-Verbunds 104 jeweils ein Kontaktblechteil 110 vorgesehen. In anderen Ausführungsformen kann beispielsweise nur auf der der oberen oder nur auf der unteren Stirnseite ein Kontaktblechteil vorgesehen sein.

Die Kontaktblechteile 110sind jeweils mit dem aus der jeweiligen Stirnseite austretenden freien Längsrändern 106a bzw. 109a der Stromkollektoren elektrisch verbunden. Die freien Längsränder 106a bzw. 109a der Stromkollektoren stehen über ihre gesamte Länge in unmittelbarem Kontakt mit dem jeweiligen Kontaktblechteil 110 und sind mit diesem durch Verschweißung verbunden.

Das Kontaktblechteil 110, das mit dem freien Rand 106a des Anodenstromkollektors verschweißt ist, liegt unmittelbar auf dem Boden des becherförmigen Gehäuseteils 101 auf und ist mit diesem durch Verschweißung verbunden. Das Kontaktblechteil 110, das mit dem freien Rand 109a des Kathodenstromkollektors verschweißt ist, steht über einen elektrischen Leiter 117 mit dem Deckelteil 102 in elektrischem Kontakt. Vorzugsweise ist der elektrische Leiter 117 sowohl mit dem Deckelteil 102 als auch mit dem Boden des becherförmigen Gehäuseteils 101 durch Verschweißung verbunden.

Da das Deckelteil 102 über die isolierende Dichtung 103 gegenüber dem becherförmigen Gehäuseteil 101 elektrisch isoliert ist, bildet das becherförmige Gehäuseteil 101 den Minuspol und das Deckelteil 102 den Pluspol des Energiespeicherelements 100.

Der hier beispielhaft erläuterte Aufbau eines Energiespeicherelements 100 in Form einer zylindrischen Rundzelle kann in vergleichbarer Weise auf eine Zelle mit einem prismatischen Gehäuse und beispielsweise einem Flachwickel oder einem gestapelten Elektroden-Separator-Verbund übertragen werden.

Von herkömmlichen Energiespeicherelementen, die mit Kontaktplatten bzw. Kontaktblechteilen versehen sind, unterscheidet sich das erfindungsgemäße Energiespeicherelement 100 durch die Ausgestaltung der Kontaktblechteile 110. Diese sind erfindungsgemäß mit mehreren Fortsätzen 120 versehen, die jeweils in Richtung des Elektroden-Separator-Verbunds 104 umgebogen sind, so dass die Kontaktblechteile 120 die beiden Stirnseiten des Elektroden-Separator-Verbunds 104, auf denen sie aufliegen, mit den umgebogenen Fortsätzen umgreifen. In der vorliegenden Darstellung erscheint die umgebogenen Fortsätze 120jeweils auf beiden Seiten der Kontaktblechteile 110.

Das Umbiegen der Fortsätze 120 erfolgt im Zuge des Herstellungsprozesses des Energiespeicherelements 100, wobei die Fortsätze 120 vorzugsweise nach dem Aufsetzen der Kontaktblechteile 110 auf die jeweiligen Stirnseiten des Elektroden-Separator-Verbunds 104 in die entsprechende Form gedrückt werden. Die Umformung kann vor oder nach der Verschweißung der Kontaktblechteile 110 mit den Längsrändern 106a und 109a der Stromkollektoren erfolgen.

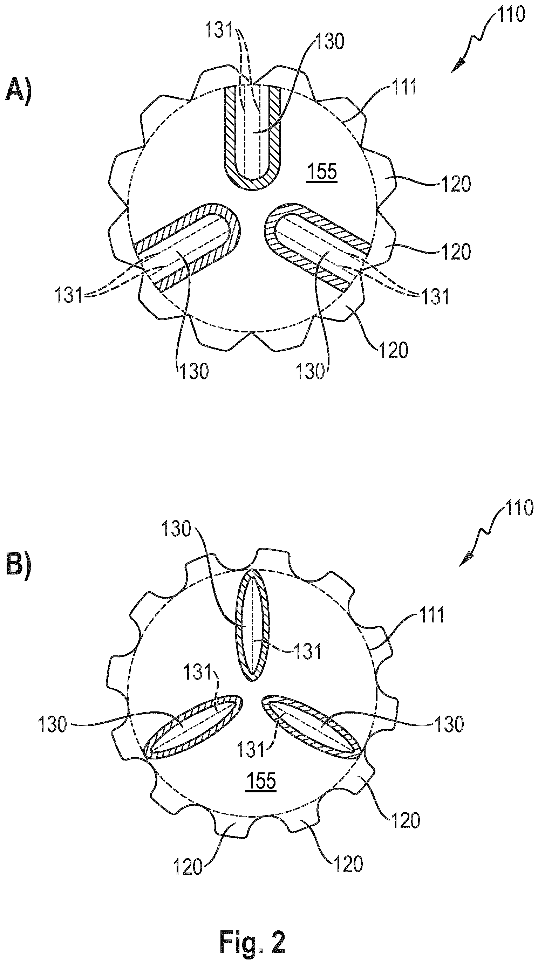

**Fig. 2** zeigt in den Teilfiguren A und B zwei beispielhafte Ausführungsformen eines Kontaktblechteils 110 gemäß der Erfindung. Beide Ausführungsformen weisen einen von dem kreisförmigen äußeren Rand 111 begrenzten Hauptbereich 155 auf, von dem die Fortsätze 120 abstehen. Solche Kontaktblechteile 110 eigenen sich beispielsweise, um sie auf die Stirnseiten des in Fig. 1 dargestellten Elektroden-Separator-Verbunds aufzulegen.

In diesen Ausführungsbeispielen sind die Fortsätze 120 jeweils entlang dem gesamten äußeren Rand 111 des Kontaktblechteils 110 angeordnet. Im Ausführungsbeispiel gemäß Teilfigur A sind zwischen benachbarten Fortsätzen 120 gekerbte Einschnitte vorgesehen. In dem Ausführungsbeispiel gemäß Teilfigur B sind zwischen den einzelnen Fortsätzen 120 gebuchtete Einschnitte vorgesehen.

Bei den Kontaktblechteilen 110 handelt es sich jeweils um Stanzteile.

Die Kontaktblechteile 110 weisen jeweils drei sternförmig angeordnete Sicken 130 auf. Auf derjenigen Flachseite des Kontaktblechteils 110, die zur Kontaktierung des Elektroden-Separator-Verbunds vorgesehen ist, erscheinen die Sicken 130 jeweils als Erhöhungen. Auf der dem Elektroden-Separator-Verbund abgewandten Seite des Kontaktblechteils 110 erscheinen die Sicken 130 jeweils als längliche Vertiefungen. Die Sicken 130 können beispielsweise durch einen Prägeprozess hergestellt werden.

Vorzugsweise erfolgt die Verschweißung der Kontaktblechteile 110 mit den jeweiligen freien Längsrändern der Stromkollektoren in den Bereichen der Sicken 130, beispielsweise durch eine, zwei oder mehr parallel zueinander liegende Schweißlinien 131 innerhalb der Sicken 130.

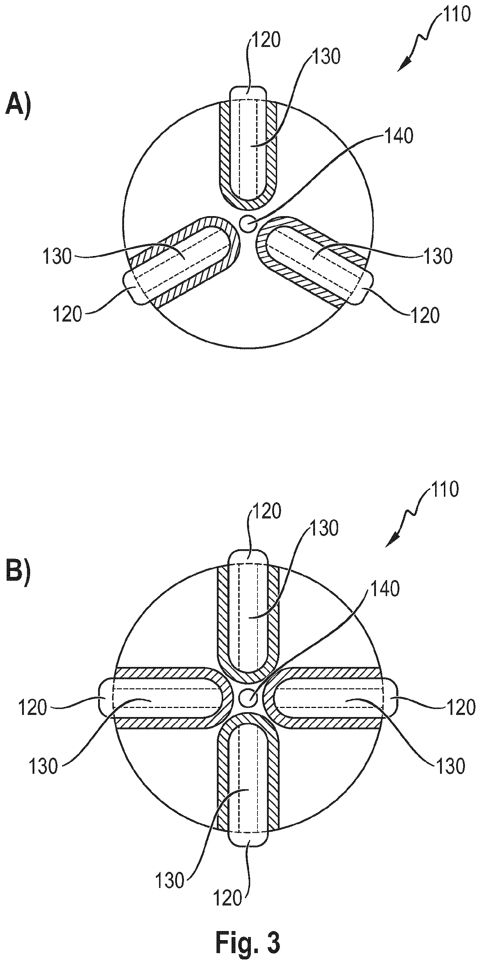

**Fig. 3** zeigt in den Teilfiguren A und B zwei weitere, besonders bevorzugte Ausführungsformen von Kontaktblechteilen 110 gemäß der Erfindung. In der Teilfigur A ist ein Kontaktblechteil 110 mit drei Fortsätzen 120 gezeigt, die jeweils eine Verlängerung einer der drei sternförmig (radial) angeordneten Sicken 130 darstellen. Die in Teilfigur B gezeigte Ausführungsform des Kontaktblechteils 110 ist vergleichbar, wobei in diesem Ausführungsbeispiel vier Sicken 130 vorgesehen sind, die jeweils zwischen sich einen Winkel von 90° einschließen. Auch in diesem Ausführungsbeispiel befinden sich die Fortsätze 120 jeweils im Bereich der Sicken 130 im Bereich des äußeren Umfangs des Kontaktblechteils 110.

Die Anordnung der Fortsätze 120 im Bereich der Sicken 130 hat sich in der Praxis als besonders vorteilhaft erwiesen. Durch die Lage der Fortsätze 120 im Bereich der Sicken 130, die als rinnenförmige Vertiefung ausgebildet sind, liegen auch die Fortsätze auf einer tieferen Ebene als die übrige Fläche des Kontaktblechteils 120. Diese Lage der Fortsätze 120 erleichtert daher die Umformung der Fortsätze 120.

Die Ausführungsform des Kontaktblechteils 110 gemäß der Teilfigur B der Fig. 3 ist besonders bevorzugt, da mit dieser Ausführungsform eine besonders exakte Platzierung des Kontaktblechteils 110 auf der jeweiligen Stirnseite eines Elektroden-Separator-Verbunds erreicht werden kann.

Darüber hinaus weisen die in den Teilfiguren A und B der Fig. 3 gezeigten Ausführungsformen des Kontaktblechteils 110 jeweils eine zentrale Aussparung 140 in Form eines kleinen Lochs auf. Diese Aussparung 140 kann genutzt werden, um den Elektroden-Separator-Verbund nach dem Aufsetzen und dem Verschweißen der Kontaktblechteile 110 mit einem Elektrolyten zu tränken.

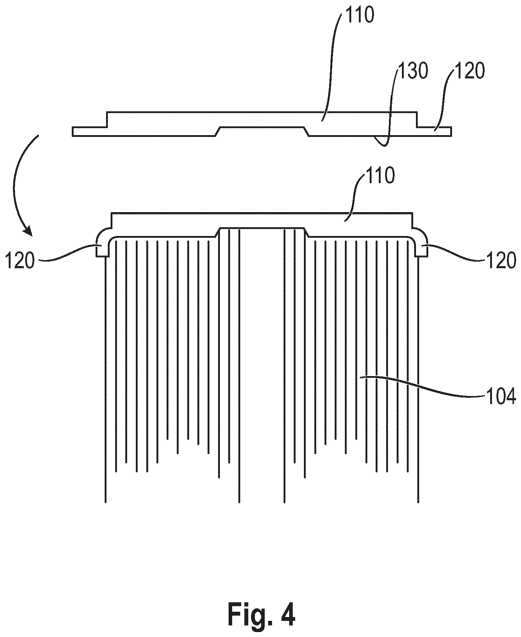

**Fig. 4** illustriert im oberen Teil der Darstellung einen Querschnitt durch ein erfindungsgemäßes Kontaktblechteil 110, bei dem vergleichbar mit der Fig. 3 die (noch nicht umgebogenen) Fortsätze 120 im Bereich der Sicken 130 angeordnet sind. Zu erkennen ist, dass in diesem Ausführungsbeispiel die Fortsätze 120 auf einer tieferen Ebene liegen als die übrigen Fläche des Kontaktblechteils 110 außerhalb der Sicken 130.

Im unteren Teil der Darstellung ist ein Elektroden-Separator-Verbund 104 angedeutet, auf dessen eine Stirnseite das Kontaktblechteil 110 aufgelegt ist. Vorzugsweise nach dem Aufsetzen des Kontaktblechteils 110 auf die Stirnseite des Elektroden-Separator-Verbunds 104 werden die Fortsätze 120 nach unten umgebogen, so dass sie in Richtung des Elektroden-Separator-Verbunds 104 orientiert sind. Die umgeformten Fortsätze 120 umgreifen dabei die randseitigen Bereiche der jeweiligen Stirnseite. Hierdurch wird zum einen die exakte Positionierung des Kontaktblechteils 110 auf der Stirnseite sichergestellt. Zum anderen wird dadurch das Einfügen des mit dem Kontaktblechteil 110 versehenen Elektroden-Separator-Verbunds 104 in ein becher- oder röhrenförmiges Gehäuseteil erleichtert. Das Kontaktblechteil 110 wirkt dabei als Einführhilfe.

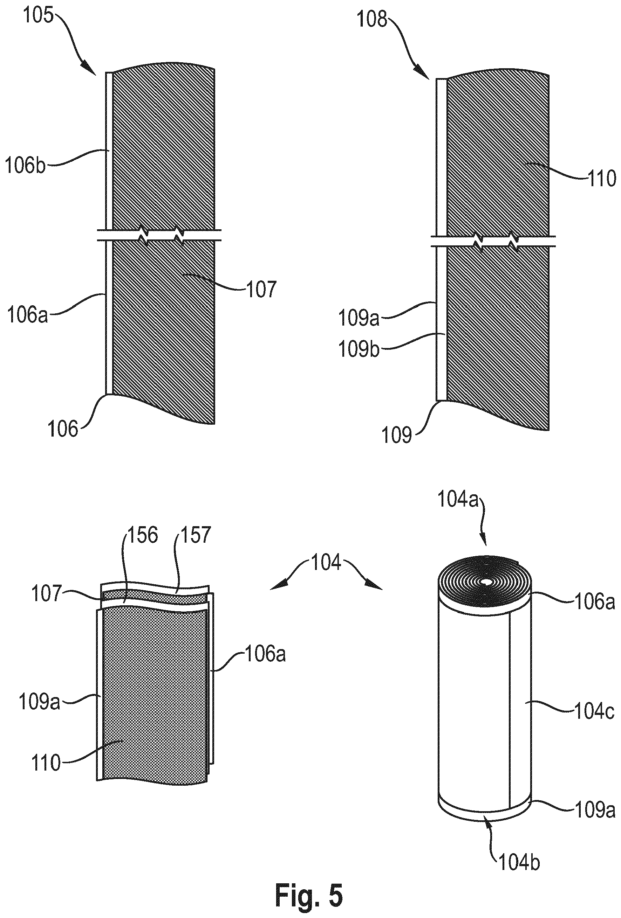

**Fig. 5** veranschaulicht den Aufbau eines Elektroden-Separator-Verbunds 104, der Bestandteil eines erfindungsgemäßen Energiespeicherelements sein kann. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus der Darstellung links unten hervor. Dort sind auch die zwei bandförmigen Separatoren 156 und 157 dargestellt, die im Wickel die Elektroden 105 und 108 voneinander trennen.

In der Darstellung rechts unten ist der Elektroden-Separator-Verbunds 104 in gewickelter Form dargestellt, wie er in einem Energiespeicherelement gemäß Figur 1 zum Einsatz kommen kann. Die aus den Stirnseiten 104a und 104b austretenden Elektrodenränder 106a und 109a sind gut zu erkennen. Der Wickelmantel 104c wird durch eine Kunststofffolie gebildet.

## Patentansprüche

1. Elektrochemisches Energiespeicherelement (100) mit den Merkmalen
a. Das elektrochemische Energiespeicherelement umfasst ein Gehäuse;
b. innerhalb des Gehäuses ist ein Elektroden-Separator-Verbund (104) angeordnet;
c. der Elektroden-Separator-Verbund (104) umfasst eine Seite, die von einem umlaufenden Rand oder mehreren Rändern begrenzt ist; und
d. auf der Seite des Elektroden-Separator-Verbunds (104) liegt ein Kontaktblechteil (110) auf, das im Bereich der Seite mit dem Elektroden-Separator-Verbund (104) durch Verschweißung verbunden ist;
**dadurch gekennzeichnet, dass**
e. das Kontaktblechteil (110) mindestens ein Teil (120) umfasst, das in Richtung des Elektroden-Separator-Verbunds (104) umgebogen ist, insbesondere über den oder einen die Seite begrenzenden Rand umgebogen ist.

2. Elektrochemisches Energiespeicherelement nach Anspruch 1 mit dem folgenden zusätzlichen Merkmal:
a. Bei dem mindestens einen Teil des Kontaktblechteils (110), das in Richtung des Elektroden-Separator-Verbunds (104), insbesondere über den die Stirnseite begrenzenden Rand, umgebogen ist, handelt es sich um mindestens einen Fortsatz oder vorstehenden Bereich, der an einen Hauptbereich des Kontaktblechteils, der auf der Stirnseite aufliegt, angeformt ist.

3. Elektrochemisches Energiespeicherelement nach einem der Ansprüche 1 oder 2 mit mindestens einem der folgenden zusätzlichen Merkmale:
a. Der Elektroden-Separator-Verbund (104) wird von spiralförmig gewickelten Elektrodenbändern mit mindestens einem dazwischen liegenden Separatorband gebildet, und der Elektroden-Separator-Verbund weist eine erste und eine zweite Stirnseite und einen dazwischen liegenden Wickelmantel auf, wobei es sich bei einer der Stirnseiten um die Seite des Elektroden-Separator-Verbunds, die von dem umlaufenden Rand begrenzt ist und auf der das Kontaktblechteil (110) aufliegt, handelt.
b. Die Elektrodenbänder werden von bandförmigen Stromkollektoren gebildet, die mit Elektrodenmaterial beschichtet sind.
c. Mindestens einer der bandförmigen Stromkollektoren weist einen Längsrand (106a, 106) auf, der nicht mit Elektrodenmaterial beschichtet ist, wobei die Elektrodenbänder innerhalb des Elektroden-Separator-Verbunds (104) derart angeordnet sind, dass der nicht mit Elektrodenmaterial beschichtete Längsrand aus der Stirnseite des Elektroden-Separator-Verbunds austritt, auf der das Kontaktblechteil (110) aufliegt.
d. Das Kontaktblechteil (110) ist mit dem aus der Stirnseite austretenden Längsrand verschweißt.

4. Elektrochemisches Energiespeicherelement nach einem der Ansprüche 1 oder 2 mit mindestens einem der folgenden zusätzlichen Merkmale:
a. Der Elektroden-Separator-Verbund (104) wird von gestapelten Elektroden, zwischen denen Separatoren oder Schichten aus einem Festelektrolyten angeordnet sind, gebildet.
b. Die Elektroden werden von Stromkollektoren gebildet, die mit Elektrodenmaterial beschichtet sind.
c. Die Stromkollektoren der positiven und/oder der negativen Elektroden weisen jeweils einen Stromkollektorrand auf, der nicht mit Elektrodenmaterial beschichtet ist, wobei die Elektroden innerhalb des Stapels derart angeordnet sind, dass alle nicht mit Elektrodenmaterial beschichteten Stromkollektorränder der positiven oder der negativen Elektroden aus einer Seite des Elektroden-Separator-Verbunds austreten, wobei es sich bei dieser Seite um die Seite des Elektroden-Separator-Verbunds, auf der das Kontaktblechteil (110) aufliegt, handelt.
d. Das Kontaktblechteil (110) ist mit den aus dieser Seite austretenden Stromkollektorrändern verschweißt.

5. Elektrochemisches Energiespeicherelement nach einem der vorhergehenden Ansprüche mit mindestens einem der folgenden zusätzlichen Merkmale:
a. Das mindestens eine umgebogene Teil (120) des Kontaktblechteils (110) liegt im Bereich des äußeren Umfangs des Kontaktblechteils (110), insbesondere des äußeren Umfangs des Hauptbereichs des Kontaktblechteils (110).
b. Das Kontaktblechteil (110) umfasst mindestens zwei, bevorzugt 2 bis 100, besonders bevorzugt drei oder vier Teile, insbesondere Fortsätze oder vorstehende Bereiche, die in Richtung des Elektroden-Separator-Verbunds (104), insbesondere über einen Rand der Seite, auf der das Kontaktblechteil (110) aufliegt, umgebogen sind.

6. Elektrochemisches Energiespeicherelement nach Anspruch 5 mit mindestens einem der folgenden zusätzlichen Merkmale:
a. Das Kontaktblechteil weist den Hauptbereich auf, an den der Fortsatz oder vorstehende Bereich angeformt ist oder an den die Fortsätze oder vorstehenden Bereiche angeformt sind.
b. Der Hauptbereich weist mindestens einen runden oder einen geraden äußeren Rand auf, von dem der Fortsatz oder vorstehende Bereich oder die Fortsätze oder vorstehenden Bereiche absteht oder abstehen.
c. Der maximale Erstreckungslänge des Hauptbereichs des Kontaktblechteils ist kleiner als die maximale Erstreckungslänge der Seite des Elektroden-Separator-Verbunds, auf der das Kontaktblechteil aufliegt.

7. Elektrochemisches Energiespeicherelement nach Anspruch 6 mit mindestens einem der folgenden zusätzlichen Merkmale:
a. Das mindestens eine umgebogene Teil (120) weist eine Rechteckform oder eine Streifenform auf;
b. Das mindestens eine umgebogene Teil (120) weist eine Dreiecksform auf;
c. Das mindestens eine umgebogene Teil (120) weist einen halbkreisförmigen Umriss auf oder umfasst ein abgerundetes Endstück, insbesondere ein Endstück mit einem halbkreisförmigen Umriss.
d. Das Kontaktblechteil umfasst mehrere umgebogene Teile (120), zwischen denen Einschnitte, insbesondere gekerbte Einschnitte, vorgesehen sind.
e. Das Kontaktblechteil umfasst mehrere umgebogene Teile (120), zwischen denen gebuchtete Einschnitte vorgesehen sind.
f. Das Kontaktblechteil umfasst mehrere umgebogene Teile (120), wobei die umgebogenen Teile (120) in regelmäßigen Abständen an den mindestens einen äußeren Rand des Hauptbereichs angeformt sind.

8. Elektrochemisches Energiespeicherelement nach einem der Ansprüche 6 oder 7 mit dem folgenden zusätzlichen Merkmal:
a. Der mindestens eine Fortsatz oder vorstehende Bereich (120) steht mindestens 0,1 und maximal 1 mm von dem äußeren Rand des Hauptbereichs ab.

9. Elektrochemisches Energiespeicherelement nach einem der vorhergehenden Ansprüche mit dem folgenden zusätzlichen Merkmal:
a. Das Kontaktblechteil (110) weist eine Dicke in einem Bereich von 50 µm bis 600 µm auf, insbesondere in einem Bereich von 100 µm bis 500 µm, vorzugsweise 200 µm oder 300 µm.

10. Elektrochemisches Energiespeicherelement nach einem der vorhergehenden Ansprüche mit dem folgenden zusätzlichen Merkmal:
a. Das Kontaktblechteil (110) weist mindestens eine Sicke (130) auf, die auf einer Flachseite des Kontaktblechteils als längliche Vertiefung und auf einer gegenüberliegenden Flachseite als längliche Erhöhung ausgebildet ist, wobei das Kontaktblechteil mit der Flachseite, welche die längliche Erhöhung trägt, dem Elektroden-Separator-Verbund (104) zugewandt ist.

11. Elektrochemisches Energiespeicherelement nach einem der vorhergehenden Ansprüche mit mindestens einem der folgenden zusätzlichen Merkmale:
a. Das Kontaktblechteil (110) ist im Bereich der mindestens einen Sicke (130) mit dem Elektroden-Separator-Verbund verschweißt.
b. Die Verschweißungen sind linienförmig.
c. Die Verschweißungen werden von zwei parallelen Schweißlinien (131) pro Sicke (130) gebildet.

12. Elektrochemisches Energiespeicherelement nach einem der vorhergehenden Ansprüche mit dem folgenden zusätzlichen Merkmal:
a. Das Kontaktblechteil weist mindestens einen Fortsatz (120) oder vorstehenden Bereich auf, der an den Bereich einer Sicke (130) angrenzt.

13. Verfahren zur Herstellung eines elektrochemischen Energiespeicherelements (100) nach einem der Ansprüche 1 bis 12 mit den folgenden Verfahrensschritten:
a. Es wird ein Elektroden-Separator-Verbund (104) mit mindestens einer Seite, die von einem umlaufenden Rand oder mehreren Rändern begrenzt ist, bereitgestellt;
b. auf diese Seite des Elektroden-Separator-Verbunds wird ein Kontaktblechteil (110) aufgelegt, wobei das Kontaktblechteil mindestens einen Fortsatz oder vorstehenden Bereich (120) aufweist;
c. der mindestens eine Fortsatz oder vorstehende Bereich (120) wird in Richtung des Elektroden-Separator-Verbunds umgebogen, insbesondere über den Rand oder die Ränder, die die Seite begrenzen;
d. vor oder nach dem Umbiegen des mindestens einen Fortsatzes oder vorstehenden Bereichs (120) wird das Kontaktblechteil (130) im Bereich der Stirnseite mit dem Elektroden-Separator-Verbund durch Verschweißung verbunden;
e. es wird ein becherförmiges Gehäuseteil (101) mit einer Öffnung sowie ein Deckelteil (102) für das Gehäuse des Energiespeicherelements bereitgestellt;
f. der Elektroden-Separator-Verbund (104) mit dem Kontaktblechteil (110) wird in das becherförmige Gehäuseteil (101) eingebracht;
g. die Öffnung des becherförmigen Gehäuseteils (101) wird mit dem Deckelteil (102) verschlossen;
h. vor und/oder nach dem Verschließen der Öffnung des becherförmigen Gehäuseteils mit dem Deckelteil werden die Elektroden des Elektroden-Separator-Verbunds (104) mit Teilen des Gehäuses und/oder einer Poldurchführung elektrisch kontaktiert.

14. Verfahren nach Anspruch 13 mit dem folgenden zusätzlichen Verfahrensschritt:
a. Vor oder nach dem Verschließen der Öffnung des becherförmigen Gehäuseteils (101) mit dem Deckelteil (102) wird der Elektroden-Separator-Verbund (104) mit einem Elektrolyten versetzt.
